# DEMANDE DE BREVET EUROPEEN

(11) **EP 0 904 910 A1**
(43) Date de publication de la demande: **31.03.1999**
(21) Numéro de dépôt: 98402382.0
(22) Date de dépôt: 28.09.1998
(51) Int. Cl.: B29C 31/06

(54) **Installation de fabrication de pièces en matière thermoplastique notamment pour véhicules automobiles**

(30) Priorité: 30.09.1997 FR 9712144
(71) Demandeur: ECIA - EQUIPEMENTS ET COMPOSANTS POUR L'INDUSTRIE AUTOMOBILE, F-25400 Audincourt (FR)
(72) Inventeur: Dumazet, Philippe, 25200 Montbeliard (FR); Grospelier, Gérard, 25200 Montbeliard (FR)
(74) Mandataire: Habasque, Etienne Joel Jean-François

(57) **Abrégé**

Cette installation comportant :
- des moyens (1) de production en continu d'une pâte de matière thermoplastique,
- des moyens (8) d'accumulation et de stockage temporaire de pâte produite, et
- des moyens (15) de prélèvement de pâte dans les moyens d'accumulation et de stockage temporaire et d'introduction de cette pâte prélevée dans un moule (16) de formation de la pièce, comprenant des moyens thermorégulés en forme de seringue (17), est caractérisée en ce que des moyens (22,26) de contrôle du fonctionnement de ces moyens thermorégulés en forme de seringue (17) sont associés à des moyens (21,25) de réception de ceux-ci dans une première position (A) de chargement de pâte dans ces moyens et dans une seconde position (B) de déchargement de pâte dans le moule.

## Description

La présente invention concerne une installation de fabrication de pièces de structure en matière thermoplastique par exemple renforcée de fibres, notamment pour véhicules automobiles.

La demanderesse a déjà décrit dans le document FR-A-2 734 199, une installation de ce type, qui comporte :
- des moyens de production en continu d'une pâte d'un mélange de matière thermoplastique renforcée de fibres, recevant en entrée d'une part, la matière thermoplastique et d'autre part, les fibres de renfort,
- des moyens d'accumulation et de stockage temporaire de pâte produite, et
- des moyens de prélèvement de pâte dans les moyens d'accumulation et de stockage temporaire et d'introduction de cette pâte prélevée, dans un moule de formation de la pièce.

Dans cette installation, les moyens de prélèvement de pâte comprennent des moyens thermorégulés en forme de seringue, comportant un corps de seringue dont une extrémité comporte un orifice de chargement/déchargement de pâte et dans lequel sont disposés des moyens de compactage/éjection de pâte.

Ces moyens thermorégulés en forme de seringue sont adaptés pour être portés par des moyens de manutention et sont déplaçables entre une position de chargement de pâte dans laquelle l'orifice de chargement/déchargement de pâte de ces moyens est en regard de la sortie des moyens d'accumulation et de stockage temporaire de pâte, pour permettre le transfert de la pâte de ces moyens d'accumulation et de stockage temporaire dans les moyens en forme de seringue et une seconde position d'introduction de la pâte chargée dans ces moyens, dans le moule de formation de la pièce.

Les moyens de compactage/éjection de pâte disposés dans le corps de seringue comprennent un piston monté déplaçable dans celui-ci, et muni d'une tige associée à des moyens de contrôle du déplacement de celui-ci comportant des moyens de freinage du déplacement dans un sens du piston, lors du chargement de pâte dans les moyens en forme de seringue et des moyens de déplacement du piston dans l'autre sens, pour le déchargement de la pâte hors de ces moyens en forme de seringue.

Dans le document mentionné précédemment, il est indiqué que ces moyens de freinage et ces moyens de déplacement du piston comprennent un vérin porté par les moyens thermorégulés en forme de seringue et dont le fonctionnement est piloté par des moyens de commande pour assurer les fonctions de compactage et d'éjection décrites précédemment.

On conçoit cependant que cette structure présente un certain nombre d'inconvénients, notamment au niveau du poids de ces moyens en forme de seringue, de leur encombrement et de la nécessité de raccorder par exemple le vérin de ceux-ci à une source d'alimentation en énergie par l'intermédiaire de conduits de raccordement aptes à suivre les déplacements de ces moyens.

Le but de l'invention est donc de résoudre ces problèmes.

A cet effet, l'invention a pour objet une installation de fabrication de pièces de structure en matière thermoplastique, notamment pour véhicules automobiles, comportant :
- des moyens de production en continu d'une pâte de matière thermoplastique, recevant en entrée au moins la matière thermoplastique,
- des moyens d'accumulation et de stockage temporaire de pâte produite, et
- des moyens de prélèvement de pâte dans les moyens d'accumulation et de stockage temporaire, et d'introduction de cette pâte prélevée dans un moule de formation de la pièce, comprenant des moyens thermorégulés en forme de seringue comportant un corps de seringue dont une extrémité comporte un orifice de chargement/déchargement de pâte et dans lequel sont disposés des moyens de compactage/éjection de pâte, ces moyens thermorégulés en forme de seringue étant adaptés pour être portés par des moyens de manutention et déplaçables entre une position de chargement de pâte dans laquelle l'orifice de chargement/déchargement de pâte des moyens en forme de seringue est en regard de la sortie des moyens d'accumulation et de stockage temporaire de pâte, pour permettre le transfert de la pâte de ces moyens d'accumulation et de stockage temporaire dans les moyens en forme de seringue et une seconde position d'introduction de la pâte chargée dans ces moyens, dans le moule de formation de la pièce, les moyens de compactage/éjection de pâte disposés dans le corps de seringue comprenant un piston monté déplaçable dans celui-ci et étant muni d'une tige associée à des moyens de contrôle du déplacement de celui-ci comportant des moyens de freinage du déplacement dans un sens du piston lors du chargement de pâte dans les moyens en forme de seringue et des moyens de déplacement du piston dans l'autre sens pour le déchargement de la pâte hors de ces moyens en forme de seringue, caractérisée en ce qu'au moins les moyens de déplacement du piston dans le sens du déchargement de la pâte hors de ces moyens en forme de seringue, sont associés à des premiers moyens de réception de ces moyens en forme de seringue dans la seconde position d'introduction de la pâte dans le moule.

Par ailleurs, les moyens de freinage du déplacement du piston lors du chargement de pâte dans les moyens en forme de seringue sont associés à des seconds moyens de réception de ceux-ci dans la première position de chargement de pâte, ou sont portés par ceux-ci.

L'invention sera mieux comprise à l'aide de la description qui va suivre, donnée uniquement à titre d'exemple et faite en se référant au dessin annexé qui représente un schéma synoptique illustrant un exemple de réalisation d'une installation de fabrication selon l'invention.

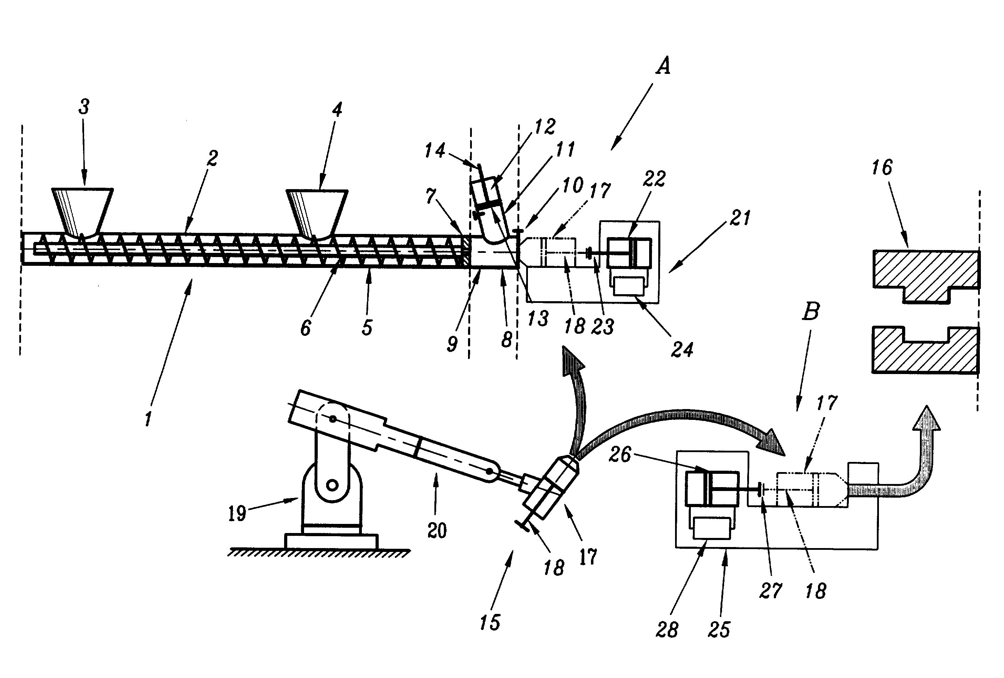

On a en effet représenté sur la figure 1, un schéma synoptique illustrant la structure générale d'un exemple de réalisation d'une installation de fabrication de pièces de structure en matière thermoplastique par exemple renforcée de fibres, notamment pour véhicules automobiles.

Pour de plus amples renseignements concernant la structure et le fonctionnement d'une telle installation, on pourra se référer au document mentionné précédemment.

On notera simplement que cette installation comporte des moyens de production en continu d'une pâte d'un mélange de matière thermoplastique par exemple renforcée de fibres, désignée par la référence générale 1 sur cette figure.

Ces moyens de production en continu de pâte comprennent par exemple une machine d'extrusion thermorégulée, désignée par la référence générale 2, recevant à une première entrée, désignée par la référence générale 3, la matière thermoplastique et à une seconde entrée désignée par la référence générale 4, les fibres de renfort par exemple.

Bien entendu, les fibres de renfort peuvent être éventuellement remplacées par une autre charge.

Cette machine d'extrusion comporte de façon classique, un fourreau de forme allongée désigné par la référence générale 5 dans lequel sont disposées par exemple des vis d'extrusion parallèles et imbriquées 6, associées à des moyens d'entraînement en rotation (non représentés).

Des moyens de chauffage sont associés à ce fourreau pour réguler de façon classique, la température des différentes portions de la machine.

La pâte produite passe ensuite par exemple dans une filière de sortie, désignée par la référençe générale 7, de cette machine d'extrusion, pour entrer sous la forme d'un boudin de pâte dans des moyens d'accumulation et de stockage temporaire de cette pâte, ces moyens étant désignés par la référence générale 8 sur cette figure.

Dans l'exemple de réalisation représenté sur cette figure, ces moyens d'accumulation et de stockage temporaire de pâte comportent une première partie de réservoir désignée par la référence générale 9, s'étendant dans le prolongement des moyens de production.

Cette partie de réservoir 9 présente une première extrémité formant l'entrée de ces moyens raccordée aux moyens de production 1 et une seconde extrémité formant la sortie de ceux-ci, munie de moyens d'obturation 10.

Une seconde partie de réservoir, désignée par la référence générale 11, s'étend latéralement à partir de la première 9.

Des moyens de compactage/éjection de pâte sont disposés dans cette seconde partie de réservoir de ces moyens.

Ces moyens de compactage/éjection sont désignés par la référence générale 12 sur cette figure et comprennent par exemple un piston 13 déplaçable dans cette seconde partie de réservoir 11 des moyens d'accumulation et de stockage temporaire de pâte, ce piston étant associé à une tige 14 reliée à des moyens de contrôle du déplacement du piston 13 dans cette partie des moyens d'accumulation et de stockage temporaire, ces moyens comprenant par exemple un vérin.

Lors d'une première phase de fonctionnement, c'est-à-dire lors du remplissage de ces moyens d'accumulation et de stockage temporaire de pâte, le déplacement de ce piston 13 est en effet freiné pour compacter la pâte dans ceux-ci, tandis que lors d'une seconde phase de fonctionnement, ce piston 13 est amené à descendre dans la partie correspondante de ces moyens pour éjecter de la pâte en sortie de ces moyens.

L'installation de fabrication comporte également des moyens de prélèvement de pâte dans ces moyens d'accumulation et de stockage temporaire et d'introduction de cette pâte prélevée dans un moule de formation de la pièce de structure.

Ces moyens de prélèvement de pâte dans les moyens d'accumulation et de stockage temporaire et d'introduction de cette pâte prélevée dans le moule, sont désignés par la référence générale 15, tandis que le moule est désigné par la référence générale 16 sur cette figure.

En fait, les moyens de prélèvement comportent des moyens thermorégulés en forme de seringue, désignés par la référence générale 17, comportant un corps de seringue dont une extrémité comporte un orifice de chargement/déchargement de pâte et dans lequel sont disposés des moyens de compactage/éjection de pâte.

Ces moyens de compactage/éjection sont désignés par la référence générale 18 sur cette figure et comportent par exemple un piston associé à une tige faisant saillie à l'extrémité du corps de seringue opposée à celle munie de l'orifice de chargement/déchargement de pâte.

Ces moyens thermorégulés en forme de seringue 17 sont adaptés pour être portés par des moyens de manutention constitués par exemple par un robot désigné par la référence générale 19 et pour être accrochés plus particulièrement à l'extrémité d'un bras 20 de celui-ci par exemple, de manière à être déplaçables entre une position de chargement de pâte dans laquelle l'orifice de chargement/déchargement de pâte de ces moyens 17 est en regard de la sortie des moyens d'accumulation et de stockage temporaire de pâte 8, pour permettre le transfert de la pâte de ces moyens d'accumulation et de stockage temporaire dans les moyens en forme de seringue, comme cela est illustré par la flèche de référence A sur cette figure et une seconde position d'introduction de la pâte chargée dans ces moyens 17, dans le moule 16 de formation de la pièce, comme cela est illustré par la flèche de référence B sur cette figure.

On a indiqué dans le document mentionné précédemment que la tige du piston des moyens 18 de compactage/éjection de pâte disposés dans les moyens en forme de seringue 17, est associée à des moyens de contrôle du déplacement de celui-ci, comportant des moyens de freinage du déplacement dans un sens du piston lors du chargement de pâte dans les moyens en forme de seringue, afin de compacter la pâte et des moyens de déplacement du piston dans l'autre sens pour le déchargement de pâte hors de ces moyens en forme de seringue et donc son éjection de ceux-ci.

Dans ce document, il est décrit que ces moyens de contrôle sont constitués par un vérin porté par les moyens thermorégulés en forme de seringue.

On a indiqué précédemment que ceci présente un certain nombre d'inconvénients.

Pour résoudre ces problèmes, dans l'installation selon l'invention, ces moyens de contrôle du déplacement du piston des moyens de compactage/éjection incorporés dans les moyens en forme de seringue, ne sont plus portés par ces moyens en forme de seringue mais sont associés à des moyens de réception de ceux-ci se présentant par exemple sous la forme de berceaux de réception de ces moyens dans leur première et/ou leur seconde positions correspondantes, c'est-à-dire leur position de chargement ou de déchargement de pâte.

On conçoit alors que ceci permet de réduire le poids et l'encombrement de ces moyens thermorégulés en forme de seringue et permet de simplifier le raccordement de ces moyens de contrôle, par exemple à une source d'alimentation en énergie pour permettre l'alimentation de ces moyens, dans la mesure où ceux-ci n'ont plus à suivre les déplacements des moyens en forme de seringue.

Dans l'exemple de réalisation représenté sur cette figure, les moyens de freinage du déplacement du piston 18 des moyens en forme de seringue 17 lors du chargement de pâte dans ces moyens, sont associés à des moyens de réception de ces moyens en forme de seringue dans la première position A de chargement de pâte et les moyens de déplacement du piston 18 dans le sens du déchargement de pâte hors de ces moyens en forme de seringue 17, sont associés à d'autres moyens de réception de ceux-ci dans la seconde position B d'introduction de la pâte dans le moule.

C'est ainsi par exemple que l'on a illustré en regard de la sortie des moyens d'accumulation et de stockage temporaire de pâte 8, des moyens de réception des moyens thermorégulés en forme de seringue 17, désignés par la référence générale 21 sur cette figure qui sont adaptés pour recevoir ces moyens thermorégulés en forme de seringue 17 en regard de cette sortie de ces moyens 8.

Le robot 19 est alors adapté pour placer les moyens thermorégulés en forme de seringue 17 dans ces moyens de réception 21 en regard de la sortie des moyens d'accumulation et de stockage temporaire de pâte 8 pour permettre le chargement de pâte dans ceux-ci.

Lors de cette phase de chargement, le déplacement du piston 18 prévu dans ces moyens en forme de seringue 17, doit être freiné.

A cet effet, ces moyens de réception 21 comprennent par exemple un vérin de freinage désigné par la référence générale 22, comportant une tige 23 dont l'extrémité est adaptée pour coopérer avec l'extrémité correspondante de la tige du piston 18 faisant saillie à partir des moyens thermorégulés en forme de seringue 17, pour freiner le déplacement de ce piston dans ces moyens lors de cette phase de chargement.

Le contrôle du fonctionnement du vérin de freinage 22 de ces moyens de réception 21 est assuré par l'intermédiaire d'une unité de commande et d'alimentation en énergie de type classique, désignée par la référence générale 24 et prévue par exemple dans ces moyens de réception 21.

Une fois cette opération de chargement de pâte terminée, le robot 19 dégage alors les moyens thermorégulés en forme de seringue 17 de ces moyens de réception 21 et déplace ces moyens 17 de leur position de chargement A vers la position de déchargement B dans laquelle ces moyens 17 sont placés dans d'autres moyens de réception de ceux-ci pour permettre l'introduction de pâte dans le moule 16.

Ces moyens de réception sont désignés par la référence générale 25 sur cette figure et comprennent également un vérin 26 comportant une tige de sortie 27 adaptée pour coopérer avec la tige du piston 18 des moyens 17 pour permettre le déplacement de ce piston de ces moyens en vue du déchargement de la pâte dans le moule.

Le contrôle du fonctionnement du vérin 26 de ces moyens de réception 25 est également assuré par l'intermédiaire d'une unité de commande et d'alimentation en énergie de type classique, désignée par la référence générale 28, et disposée par exemple dans ces moyens de réception 25.

Il va de soi bien entendu que ces moyens de réception peuvent comporter des moyens permettant de centrer correctement les moyens en forme de seringue en regard des autres éléments de cette installation et d'assurer une bonne étanchéité entre ces différents éléments lors du chargement et du déchargement de pâte.

Par ailleurs, les unités de commande et d'alimentation en énergie 24 et 28 des vérins 22 et 26 de ces moyens de réception peuvent être constituées par un seul et même module d'alimentation pour des questions de facilité d'implantation et de mise en oeuvre.

On conçoit alors que cette structure présente un certain nombre d'avantages car le robot n'a plus qu'à déplacer simplement les moyens thermorégulés en forme de seringue entre les positions de chargement et de déchargement de pâte, ces moyens présentant un poids et un encombrement réduits dans la mesure où ceux-ci ne portent plus de moyens de contrôle des déplacements des moyens de compactage/éjection intégrés dans ceux-ci.

Par ailleurs, ceci permet également d'optimiser le dimensionnement des vérins utilisés pour freiner le déplacement du piston des moyens thermorégulés en forme de seringue lors de la phase de chargement et pour le déplacement de ce piston lors de la phase de déchargement et d'introduction de cette pâte dans le. moule par exemple, en adaptant de façon précise ceux-ci aux efforts requis lors de ces deux opérations distinctes.

Le moule peut quant à lui être un moule de fabrication de pièces par injection, compression ou injection/compression.

Il va de soi bien entendu que différents modes de réalisation d'une telle installation peuvent être envisagés.

C'est ainsi par exemple que les moyens thermorégulés en forme de seringue peuvent porter les moyens de freinage du déplacement du piston car ceux-ci présentent une taille réduite en raison des efforts limités qui sont requis par ce freinage.

Par contre, les efforts requis pour l'éjection de la pâte étant importants, il est souhaitable que les moyens de contrôle du déplacement du piston dans le sens du déchargement de la pâte soient toujours séparés des moyens en forme de serrage afin d'en réduire le poids et l'encombrement.

## Revendications

1. Installation de fabrication de pièces de structure en matière thermoplastique, notamment pour véhicules automobiles, comportant :
- des moyens (1) de production en continu d'une pâte de matière thermoplastique, recevant en entrée au moins la matière thermoplastique,
- des moyens (8) d'accumulation et de stockage temporaire de pâte produite, et
- des moyens (15) de prélèvement de pâte dans les moyens d'accumulation et de stockage temporaire (8), et d'introduction de cette pâte prélevée dans un moule (16) de formation de la pièce, comprenant des moyens thermorégulés en forme de seringue (17) comportant un corps de seringue dont une extrémité comporte un orifice de chargement/déchargement de pâte et dans lequel sont disposés des moyens de compactage/éjection de pâte (18), ces moyens thermorégulés en forme de seringue (17) étant adaptés pour être portés par des moyens de manutention (19) et déplaçables entre une position de chargement de pâte (A) dans laquelle l'orifice de chargement/déchargement de pâte des moyens en forme de seringue (17) est en regard de la sortie des moyens d'accumulation et de stockage temporaire de pâte (8), pour permettre le transfert de la pâte de ces moyens d'accumulation et de stockage temporaire (8) dans les moyens en forme de seringue (17) et une seconde position (B) d'introduction de la pâte chargée dans ces moyens (17), dans le moule (16) de formation de la pièce, les moyens de compactage/éjection (18) de pâte disposés dans le corps de seringue comprenant un piston monté déplaçable dans celui-ci et étant muni d'une tige associée à des moyens de contrôle du déplacement de celui-ci comportant des moyens de freinage (22) du déplacement dans un sens du piston lors du chargement de pâte dans les moyens en forme de seringue (17) et des moyens de déplacement (26) du piston dans l'autre sens pour le déchargement de la pâte hors de ces moyens en forme de seringue (17), caractérisée en ce qu'au moins les moyens de déplacement (26) du piston (18) dans le sens du déchargement de la pâte hors de ces moyens en forme de seringue (17), sont associés à des premiers moyens de réception (25) de ces moyens en forme de seringue (17) dans la seconde position (B) d'introduction de la pâte dans le moule (16).

2. Installation selon la revendication 1, caractérisée en ce que les moyens de freinage (22) du déplacement du piston (18) lors du chargement de pâte dans les moyens en forme de seringue (17), sont associés à des seconds moyens de réception (21) de ces moyens en forme de seringue (17) dans la première position (A) de chargement de pâte.

3. Installation selon la revendication 1, caractérisée en ce que les moyens de freinage du déplacement du piston lors du chargement de pâte dans les moyens en forme de seringue (17), sont portés par ceux-ci.

4. Installation selon l'une quelconque des revendications précédentes, caractérisée en ce que les moyens de déplacement (26) du piston (18) dans le sens du déchargement de la pâte comprennent un premier vérin.

5. Installation selon l'une quelconque des revendications précédentes, caractérisé en ce que les moyens de freinage (22) du déplacement du piston (18) comprennent un deuxième vérin.

6. Installation selon l'une quelconque des revendications précédentes, caractérisée en ce que les moyens de réception des moyens en forme en seringue, comprennent des moyens de centrage en position de ceux-ci.

7. Installation selon l'une quelconque des revendications précédentes, caractérisée en ce que les moyens de production (1) reçoivent également en entrée, une charge.

8. Installation selon la revendication 7, caractérisée en ce que la charge est constituée de fibres de renfort.
